# EUROPEAN PATENT APPLICATION

(11) **EP 2 308 905 A1**
(43) Date of publication of application: **13.04.2011**
(21) Application number: 09800184.5
(22) Date of filing: 14.07.2009
(51) Int. Cl.: C08F 220/32, C08F 220/06, C08F 232/08

(54) **CURABLE COPOLYMER AND CURABLE RESIN COMPOSITION**

(30) Priority: 25.07.2008 JP 2008192617
(71) Applicant: Daicel Chemical Industries, Ltd., Kita-ku, Osaka-shi Osaka 530-0001 (JP)
(72) Inventor: TAKAWAKI, Koichi, Himeji-shi Hyogo 671-1283 (JP); NIJUKKEN, Toshihiko, Himeji-shi Hyogo 671-1283 (JP)
(74) Representative: Grünecker, Kinkeldey, Stockmair & Schwanhäusser Anwaltssozietät
(86) International application number: PCT/JP2009/003295
(87) International publication number: WO 2010/010667

(57) **Abstract**

A copolymer includes at least monomeric units (A) corresponding to a carbonyl- or acid-anhydride-group-containing polymerizable unsaturated compound (a) ; monomeric units (B) corresponding to at least one polymerizable unsaturated compound (b) selected from compounds represented by following Formulae (1) and (2) (wherein R^{a} represents a hydrogen atom or, e.g., an alkyl group having 1 to 4 carbon atoms; and R^{b} represents a single bond or, e.g., an alkylene group having 1 to 18 carbon atoms); and monomeric units (C) corresponding to at least one polymerizable unsaturated compound (c) selected from compounds represented by following Formulae (3) and (4) (wherein R^{c} represents a hydrogen atom or, e.g., an alkyl group having 1 to 4 carbon atoms; and R^{d} represents a single bond or, e.g., an alkylene group having 1 to 18 carbon atoms). The copolymer, when used as a radiation-sensitive resin, can give a high-performance cured film excellent in hardness, solvent resistance, and thermal stability.

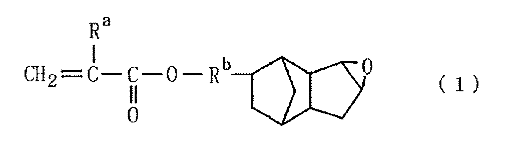

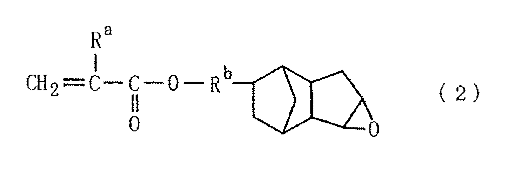

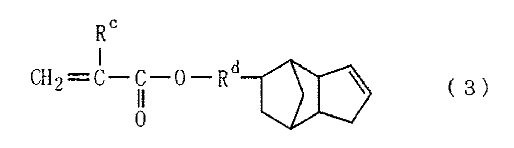

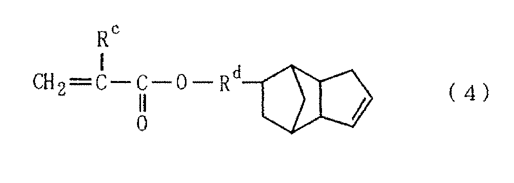

## Description

### Technical Field

The present invention relates to copolymers containing structural units having a carboxyl group or an acid anhydride group, structural units having a 3,4-epoxytricyclo[5.2.1.0^{2,6}]decane ring, and structural units having a dicyclopentene ring (tricyclo[5.2.1.0^{2,6}]-3-decene ring); and to curable resin compositions containing the copolymers. More specifically, the present invention relates to copolymers containing structural units having a carboxyl group or an acid anhydride group, structural units having a 3,4-epoxytricyclo[5.2,1.0^{2,6}]decane ring, and structural units having a dicyclopentene ring (tricyclo[5.2.1.0^{2,6}]-3-decene ring); and to curable resin compositions containing the copolymers, which copolymers are suitable typically as materials for use in lithography techniques in semiconductor processes using active rays (actinic light) such as far-ultraviolet rays, electron beams, ion beams and X rays; as materials for radiation-sensitive resins for the formation typically of insulating films and protective films provided in electronic components such as liquid crystal display devices, integrated circuit devices, and solid-state image sensing devices; and as materials for the formation of liquid crystal display materials such as liquid crystal display photospacers, materials for the formation of liquid crystal display ribs, overcoats, color resists for the formation of color filters, and thin-film transistor (TFT) insulating films.

### Background Art

Demands have been increasingly made to provide devices with larger packing densities in the production of electronic devices which require micromachining on the order of submicrons, typified by very-large-scale integrated circuits (VLSIs). To meet these demands, more and more requirements have been made on photolithography techniques for fine patterning. Electronic components such as liquid crystal display devices, integrated circuit devices and solid-state image sensing devices may include, for example, protective films for preventing deterioration and damage of the electronic components; interlayer insulating films provided for insulation between interconnections arranged as layers; planarizing films for planarizing the surface of devices; and insulating films for maintaining electric insulation. Of these devices, a TFT liquid crystal display device as an example of liquid crystal display devices is produced, for example, in the following manner. Initially, a back substrate (back panel) is prepared by forming a polarizer on a glass plate; forming a transparent electroconductive circuit layer made typically of indium-tin oxide (ITO) and thin-film transistors (TFTs) thereon; and covering these components with an interlayer insulating film. Separately, a front substrate (front panel) is prepared by forming a polarizer on a glass plate; carrying out patterning for a black matrix layer and a color filter layer according to necessity; and sequentially forming a transparent electroconductive circuit layer and an interlayer insulating film. The front substrate and the back substrate are arranged so as to face each other with the interposition of spacers, and a liquid crystal is sealed in between the two substrates to complete a TFT liquid crystal display device.
A photosensitive resin composition for use therein is required to give a cured article excellent in transparency, thermal stability, developability and surface smoothness.

Chemically amplified resists using light-activatable acid generators as photosensitizers are well known as resists having higher sensitivity. Using such a chemically amplified resist, higher sensitivity is available, for example, in the following manner. A resin composition containing a light-activatable acid generator and a resin having an epoxy-containing structural unit is exposed to light to allow the light-activatable acid generator to generate a protic acid, and the protic acid acts to cleave the epoxy group to cause a crosslinking reaction. This makes the resin insoluble in a developer to thereby form a pattern. In addition, a heat treatment is conducted after light exposure, this allows the acid to move in a resist solid phase, and the acid thus helps to catalytically amplify chemical changes of the resist resin and other components. Thus, a dramatically high sensitivity is achieved, as compared with that in a customary resist having a photoreaction efficiency (reaction per one photon) of less than 1. The great majority of currently developed resists are chemically amplified resists. Irradiation light sources have shorter and shorter wavelengths, and materials usable therein should have higher and higher sensitivities. To develop such high-sensitivity materials, the chemical amplification mechanism should essentially be employed.

On the other hand, radiation-sensitive resin compositions are generally used as materials for forming dielectric films in TFT liquid crystal display devices and integrated circuit devices, because these dielectric films should be subjected to fine processing. Such radiation-sensitive resin compositions are required to have high radiation sensitivities for higher productivity. The dielectric films are also required to have excellent solvent resistance. This is because, the dielectric films, if having poor solvent resistance, may undergo swelling, deformation, and/or delamination from substrates by the action of organic solvents, and this may cause serious problems in the production of liquid crystal display devices and integrated circuit devices. In addition, dielectric films to be provided typically in liquid crystal display devices and solid-state imaging devices should have high optical transparency according to necessity.

For meeting these requirements, Japanese Unexamined Patent Application Publication (JP-A) No. 2003-7612 discloses a photosensitive resin composition containing a copolymer between an alicyclic epoxy-containing polymerizable unsaturated compound and a radically polymerizable compound, in which an unsaturated carboxylic acid, for example, is used as the radical polymerizable compound. Such epoxy compounds are effective for yielding films having good etching resistance in optically amplified resists, because they are readily crosslinked by the action of an acid generated by a light-activatable acid generator and subsequent heating (post-baking). However, the alicyclic epoxy-containing polymerizable unsaturated compound, though being highly cationically polymerizable, readily reacts with a carboxyl group derived from an unsaturated carboxylic acid used for imparting alkali solubility, is thereby poor in storage stability, and should be stored at low temperatures of -20°C or lower. This substantially impedes the practical use of the compound.

Japanese Patent No. 3055495 discloses a photosensitive resin composition including a copolymer containing monomeric units corresponding to a (meth)acrylic acid ester whose oxygen atom in the ester moiety being directly bound to a bridged hydrocarbon group; monomeric units having an epoxy-containing hydrocarbon group; and carboxyl-containing monomeric units. Such (meth)acrylic acid esters whose oxygen atom in the ester moiety being directly bound to a bridged hydrocarbon group, however, are often difficult to prepare as monomers, because they have a very bulky group at the adjacent position to the ester group. In addition, they have poor solubility in organic solvents and show poor handleability in polymerization reactions, and the resulting resins also show poor handleability. The (meth)acrylic acid esters whose oxygen atom in the ester moiety being directly bound to a bridged hydrocarbon group may be difficult to yield uniform polymers and thereby fail to provide desired resist performance, because they have very low polarity and, when copolymerized with a high-polarity unsaturated carboxylic acid or epoxy-containing monomer, may cause uneven distribution in monomer composition of the polymers.

Japanese Patent No. 3838626 discloses a photosensitive resin composition containing a copolymer having structural units corresponding to (meth)acrylic acid and an alicyclic-epoxy-containing polymerizable unsaturated compound. PCT International Publication Number WO 2006/059564 discloses a photosensitive resin composition containing a copolymer having structural units containing an alkali-soluble group, and structural units having a 3,4-epoxytricyclo[5.2.1.0^{2,6}]decane ring. These resin compositions, however, give cured films not always sufficiently satisfactory in hardness, solvent resistance, and thermal stability, although the resin compositions excel in storage stability and developability, and the cured films have satisfactory transparency.

### Citation List

### Patent Literature

PTL 1: Japanese Unexamined Patent Application Publication (JP-A) No. 2003-7612
PTL 2: Japanese Patent No. 3055495
PTL 3: Japanese Patent No. 3838626
PTL 4: PCT International Publication Number WO 2006/059564

### Summary of Invention

### Technical Problem

An object of the present invention is to provide a copolymer curable by the action of light and/or heat, which copolymer, when used typically as a radiation-sensitive resin, gives a high-performance cured film excellent in hardness, solvent resistance and thermal stability. Another object of the present invention is to provide a curable resin composition containing the copolymer.

### Solution to Problem

After intensive investigations to achieve the objects, the present inventors have found that a specific copolymer, when used typically as a radiation-sensitive resin, can give a high-performance cured film excellent in hardness, solvent resistance and thermal stability; and that this copolymer is obtained by polymerization of a polymerizable unsaturated compound having a carboxyl group or an acid anhydride group, a polymerizable unsaturated compound having a 3,4-epoxytricyclo[5.2.1.0^{2,6}]decane ring, and a polymerizable unsaturated compound having a dicyclopentene ring (tricyclo[5.2.1.0^{2,6}]-3-decene ring). The present invention has been made based on these findings.

Specifically, the present invention provides, in an embodiment, a copolymer which includes at least monomeric units (A), monomeric units (B), and monomeric units (C) in which the monomeric units (A) correspond to at least one polymerizable unsaturated compound (a) containing a carboxyl group or an acid anhydride group, the monomeric units (B) correspond to at least one polymerizable unsaturated compound (b) containing a bridged alicyclic group with an epoxy group on its ring and being selected from the group consisting of compounds represented by following Formulae (1) and (2): 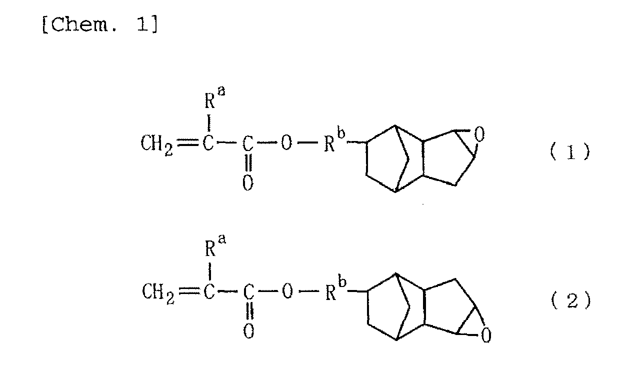 wherein R^{a}s in respective formulae independently represent a hydrogen atom or an alkyl or hydroxyalkyl group having 1 to 4 carbon atoms; and R^{b}s in respective formulae independently represent a single bond or an alkylene group which has 1 to 18 carbon atoms and which may contain a heteroatom, and the monomeric units (C) correspond to at least one polymerizable unsaturated compound (c) containing a bridged alicyclic group with a double bond in its ring and being selected from the group consisting of compounds represented by following Formulae (3) and (4): 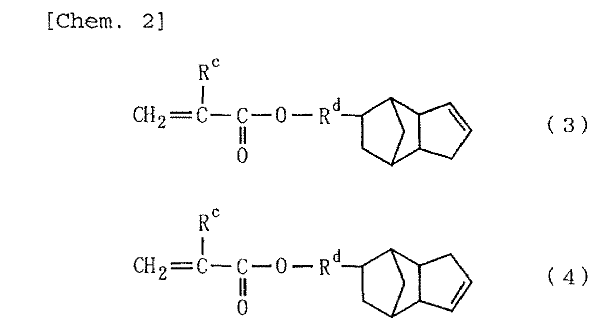 wherein R^{c}s in respective formulae independently represent a hydrogen atom or an alkyl or hydroxyalkyl group having 1 to 4 carbon atoms; and R^{d}s in respective formulae independently represent a single bond or an alkylene group which has 1 to 18 carbon atoms and which may contain a heteroatom.

This copolymer may further include monomeric units (D) in addition to the monomeric units (A), monomeric units (B), and monomeric units (C) in which the monomeric units (D) correspond to at least one polymerizable unsaturated compound (d) selected from the group of monomers consisting of styrenes (d1) which may be substituted with an alkyl group or a hydroxyl group; unsaturated carboxylic acid esters (d2); N-substituted maleimides (d3); and monocyclic or polycyclic olefins (d4) in which the unsaturated carboxylic acid esters (d2) are represented by following Formula (5): 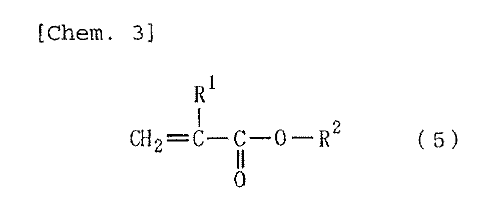 wherein R¹ represents a hydrogen atom or an alkyl group having 1 to 7 carbon atoms; R² represents a linear or branched-chain alkyl group having 1 to 18 carbon atoms, an alkenyl group having 2 to 18 carbon atoms, an aryl group, an aralkyl group, an - (R³-O)ₘ-R⁴ group (wherein R³ represents a bivalent hydrocarbon group having 1 to 12 carbon atoms; R⁴ represents a hydrogen atom or a hydrocarbon group; and "m" denotes an integer of 1 or more), or a group containing a nonaromatic monocyclic or polycyclic structure, and the N-substituted maleimides (d3) are represented by following Formula (6): 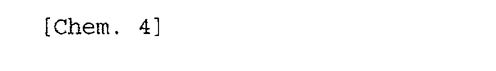 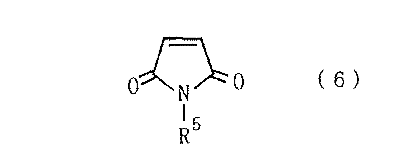 wherein R⁵ represents a substituted or unsubstituted phenyl group, a substituted or unsubstituted aralkyl group, or a substituted or unsubstituted cycloalkyl group.

The present invention further provides, in another embodiment, a curable resin composition containing the copolymer.

This curable resin composition may further contain a curing agent and/or a curing catalyst.

### Advantageous Effects of Invention

The copolymer and curable resin composition according to the present invention, through curing by the action of light and/or heat, can give a high-performance cured film excellent in hardness, solvent resistance and thermal stability (heat resistance). The copolymer is highly stable in its synthetic preparation. In addition, when adopted to a radiation-sensitive resin composition, the copolymer allows the radiation-sensitive resin composition to have satisfactory developability, etching resistance and transparency. In addition, the curable resin composition excels in storage stability. The curable resin composition containing the copolymer is therefore useful typically as materials for the formation of liquid resists, dry films (dry film resists), insulating films, photosensitive materials, and liquid crystal display materials (such as liquid crystal display photospacers, materials for the formation of liquid crystal display ribs, overcoats, color resists for the formation of color filters, and TFT insulating films).

### Description of Embodiments

The copolymer according to the present invention includes at least monomeric units (constitutional repeating units) (A) corresponding to at least one polymerizable unsaturated compound (a) containing a carboxyl group or an acid anhydride group; monomeric units (constitutional repeating units) (B) corresponding to at least one polymerizable unsaturated compound (b) containing a bridged alicyclic group with an epoxy group on its ring and being selected from the compounds represented by Formulae (1) and (2); and monomeric units (constitutional repeating units) (C) corresponding to at least one polymerizable unsaturated compound (c) containing a bridged alicyclic group with a double bond in its ring and being selected from the compounds represented by Formulae (3) and (4).

### [Polymerizable Unsaturated Compounds (a) Containing Carboxyl Group or Acid Anhydride Group]

Exemplary polymerizable unsaturated compounds (a) containing a carboxyl group or an acid anhydride group usable herein include monocarboxylic acids having a polymerizable unsaturated group; dicarboxylic acids having a polymerizable unsaturated group; and acid anhydrides having a polymerizable unsaturated group. Exemplary polymerizable unsaturated compounds containing a carboxyl group include aliphatic unsaturated monocarboxylic acids such as acrylic acid, methacrylic acid and crotonic acid; aliphatic unsaturated dicarboxylic acids such as maleic acid, fumaric acid, citraconic acid, mesaconic acid and itaconic acid; and modified unsaturated monocarboxylic acids whose carboxylic acid moiety being bound to an unsaturated group with the interposition of an extended chain, such as β-carboxyethyl (meth)acrylates, 2-acryloyloxyethylsuccinic acid and 2-acryloyloxyethylphthalic acid. Exemplary polymerizable unsaturated compounds containing a carboxyl group usable herein further include compounds corresponding to (meth)acrylic acids, except for being modified with a lactone, such as compounds represented by following Formula (7); compounds corresponding to hydroxyalkyl (meth)acrylates, except for being modified with a lactone and being further acid-modified on its terminal hydroxyl group with an acid anhydride, such as compounds represented by following Formula (8); and compounds corresponding to polyether polyol (meth)acrylates, except for being acid-modified on its ester terminal hydroxyl group with an acid anhydride, such as compounds represented by following Formula (9):

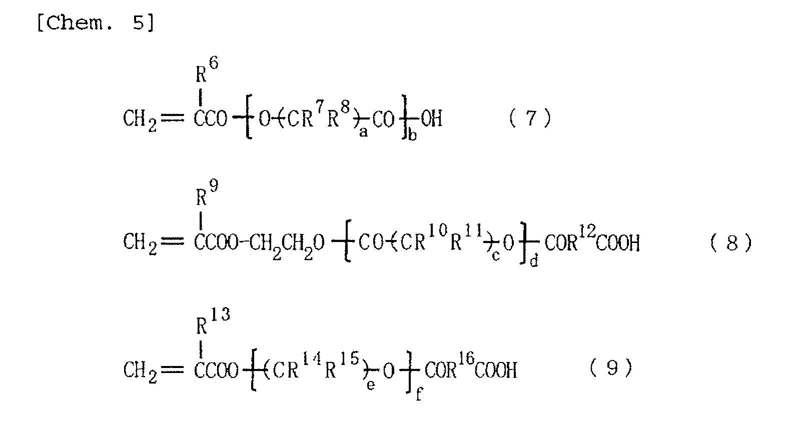

In Formula (7), R⁶ represents a hydrogen atom or a methyl group; R⁷ and R⁸ are the same as or different from each other and each represent a hydrogen atom, a methyl group or an ethyl group; "a" denotes an integer of 4 to 8; and "b" denotes an integer of 1 to 10, wherein R⁷s in the number of "a" may be the same as or different from one another, and R⁸s in the number of "a" may be the same as or different from one another.

In Formula (8), R⁹ represents a hydrogen atom or a methyl group; R¹⁰ and R¹¹ are the same as or different from each other and each represent a hydrogen atom, a methyl group or an ethyl group; "c" denotes an integer of 4 to 8; "d" denotes an integer of 1 to 10; and R¹² represents a bivalent saturated or unsaturated aliphatic hydrocarbon group having 1 to 10 carbon atoms, a bivalent saturated or unsaturated alicyclic hydrocarbon group having 3 to 6 carbon atoms, or a substituted or unsubstituted bivalent arylene group, wherein R¹⁰s in the number of "c" may be the same as or different from one another, and R¹¹s in the number of "c" may be the same as or different from one another.

In Formula (9), R¹³ represents a hydrogen atom or a methyl group; R¹⁴ and R¹⁵ are the same as or different from each other and each represent a hydrogen atom, a methyl group, an ethyl group, a propyl group or a butyl group; "e" denotes an integer of 1 to 10; "f" denotes an integer of 1 to 10; and R¹⁶ represents a bivalent saturated or unsaturated aliphatic hydrocarbon group having 1 to 10 carbon atoms, a bivalent saturated or unsaturated alicyclic hydrocarbon group having 3 to 6 carbon atoms, or a substituted or unsubstituted bivalent arylene group, wherein R¹⁴s in the number of "e" may be the same as or different from one another, and R¹⁵s in the number of "e" may be the same as or different from one another.

Examples of the bivalent saturated or unsaturated aliphatic hydrocarbon groups having 1 to 10 carbon atoms include methylene, ethylene, ethylidene, propylene, isopropylidene, trimethylene, tetramethylene, pentamethylene, hexamethylene, octamethylene, decamethylene, and vinylene groups. Examples of the bivalent saturated or unsaturated alicyclic hydrocarbon groups having 3 to 6 carbon atoms include cyclopropylene, cyclobutylene, cyclopentylene, cyclohexylene, cyclopentylidene, and cyclohexylidene groups. Examples of the substituted or unsubstituted bivalent arylene groups include phenylene, tolylene, and xylylene groups.

Exemplary polymerizable unsaturated compounds containing an acid anhydride group include acid anhydrides corresponding to the polymerizable unsaturated compounds containing a carboxyl group, such as maleic anhydride and other anhydrides of the dicarboxylic acids having a polymerizable unsaturated group.

Of the polymerizable unsaturated compounds (a) containing a carboxyl group or an acid anhydride group, preferred are at least one compound selected from the group consisting of (meth)acrylic acids, maleic anhydride, and the compounds represented by Formulae (7) to (9) [of which the compound represented by Formula (7) is preferred]; and (meth)acrylic acid in combination with at least one compound selected from the group consisting of the compounds represented by Formulae (7) to (9) [of which the compound represented by Formula (7) is preferred].

### [Polymerizable Unsaturated Compounds (b) Containing Bridged Alicyclic Group With Epoxy Group on Its Ring]

In Formulae (1) and (2), R^{a}s in respective formulae independently represent a hydrogen atom or an alkyl or hydroxyalkyl group having 1 to 4 carbon atoms; and R^{b}s in respective formulae independently represent a single bond or an alkylene group which has 1 to 18 carbon atoms and which may contain a heteroatom, in the at least one polymerizable unsaturated compound (b) containing a bridged alicyclic group with an epoxy group on its ring and being selected from the compounds represented by Formulae (1) and (2).

Exemplary alkyl groups having 1 to 4 carbon atoms include methyl, ethyl, propyl, isopropyl, butyl, isobutyl, and t-butyl groups. Exemplary hydroxylalkyl groups having 1 to 4 carbon atoms include hydroxymethyl, 1-hydroxyethyl, 2-hydroxyethyl, 1-hydroxypropyl, 2-hydroxypropyl, 3-hydroxypropyl, 1-hydroxyisopropyl, 2-hydroxyisopropyl, 1-hydroxybutyl, 2-hydroxybutyl, 3-hydroxybutyl, and 4-hydroxybutyl groups.

R^{a}s are each preferably hydrogen atom, methyl group, hydroxymethyl group, 1-hydroxyethyl group, or 2-hydroxyethyl group, and are each more preferably a hydrogen atom or methyl group.

In the alkylene group as R^{b} which has 1 to 18 carbon atoms and which may contain a heteroatom, the heteroatom may be bound at the terminal of the alkylene group or may be interposed between carbon atoms constituting the alkylene group. Exemplary heteroatoms include nitrogen, oxygen, and sulfur atoms.

Representative examples of R^{b} include groups represented by following Formula (10): 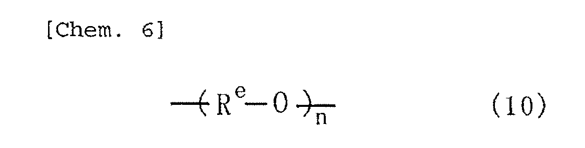 wherein R^{e} represents an alkylene group having 1 to 18 carbon atoms; and "n" denotes an integer of 0 or more, and wherein the total number of carbon atoms in the formula is 0 to 18.

Exemplary alkylene groups having 1 to 12 carbon atoms as R^{e} include methylene, ethylene, propylene, trimethylene, tetramethylene, hexamethylene, octamethylene, decamethylene, dodecamethylene, tetradecamethylene, hexadecamethylene, and octadecamethylene groups. R^{e} is preferably an alkylene group having 1 to 12 carbon atoms, such as methylene, ethylene, propylene, tetramethylene, or hexamethylene group, of which an alkylene group having 1 to 6 carbon atoms is more preferred. The repetition number "n" is preferably an integer of 0 to 10, more preferably an integer of 0 to 4, and furthermore preferably 0 or 1.

Other representative examples of R^{b} include alkylene group having 1 to 18 carbon atoms, such as methylene group, ethylene group, propylene group, and trimethylene groups, of which alkylene groups having 1 to 12 carbon atoms are preferred, and alkylene groups having 1, to 6 carbon atoms are more preferred; thioalkylene groups having 1 to 18 carbon atoms, such as thiomethylene group, thioethylene group, and thiopropylene group, of which thioalkylene groups having 1 to 12 carbon atoms are preferred, and thioalkylene groups having 1 to 6 carbon atoms are more preferred; and aminoalkylene groups having 1 to 18 carbon atoms, such as aminomethylene group, aminoethylene group, and aminopropylene group, of which aminoalkylene groups having 1 to 12 carbon atoms are preferred, and aminoalkylene groups having 1 to 6 carbon atoms are more preferred.

R^{b} is preferably a single bond [a group of Formula (10) in which "n" is 0], an alkylene group having 1 to 6 carbon atoms (more preferably one having 1 to 3 carbon atoms), or an oxyalkylene group having 1 to 6 carbon atoms (more preferably one having 2 or 3 carbon atoms) [a group of Formula (10) in which "n" is 1, and R^{e} is alkylene group having 1 to 6 carbon atoms (more preferably one having 2 or 3 carbon atoms)]. R^{b} is more preferably a single bond or oxyethylene group.

Representative examples of the polymerizable unsaturated compounds being represented by Formulae (1) and (2) and having a bridged alicyclic group with an epoxy group on its ring (compounds containing a 3,4-epoxytricyclo[5.2.1.0^{2,6}]decane ring) include epoxidized dicyclopentenyl (meth)acrylates represented by following Formula (11) [i.e., 3,4-epoxytricyclo[5.2.1.0²,⁶]dec-9-yl (meth)acrylates; and 3,4-epoxytricyclo[5.2.1.0^{2,6}]dec-8-yl (meth)acrylates], epoxidized dicyclopentenyloxyethyl (meth)acrylates represented by following Formula (12) [i.e., 2-(3,4-epoxytricyclo[5.2.1.0^{2,6}]dec-9-yloxy)ethyl (meth)acrylates; and 2-(3,4-epoxytricyclo[5.2.1.0^{2,6}]dec-8-yloxy)ethyl (meth)acrylatesl, epoxidized dicyclopentenyloxybutyl (meth)acrylates represented by following Formula (13), and epoxidized dicyclopentenyloxyhexyl (meth)acrylates represented by following Formula (14). Among them, epoxidized dicyclopentenyl (meth)acrylates and epoxidized dicyclopentenyloxyethyl (meth)acrylates are especially preferred. In the following formulae, R^{a'} represents a hydrogen atom or a methyl group.

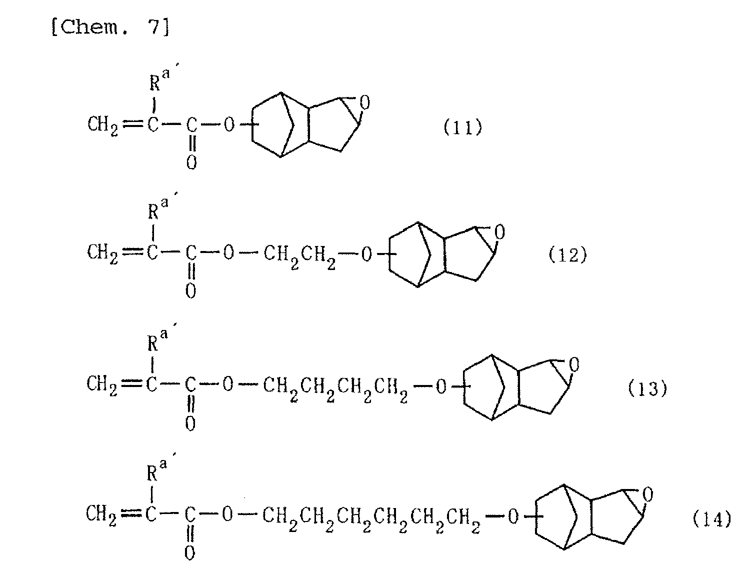

Each of the compound(s) represented by Formula (1) and the compound(s) represented by Formula (2) can be used alone or in combination in arbitrary proportions. When the two types of compounds are used in combination as a mixture, the ratio of the compound(s) of Formula (1) to the compound(s) of Formula (2) is preferably from 5:95 to 95:5, more preferably from 10:90 to 90:10, and furthermore preferably from 20:80 to 80:20.

### [Polymerizable Unsaturated Compounds (c) Containing Bridged Alicyclic Group With Double Bond in Its Ring]

In Formulae (3) and (4), R^{c}s in respective formulae independently represent a hydrogen atom or an alkyl or hydroxyalkyl group having 1 to 4 carbon atoms; and R^{d}s in respective formulae independently represent a single bond or an alkylene group which has 1 to 18 carbon atoms and which may contain a heteroatom, in the at least one polymerizable unsaturated compound (c) containing a bridged alicyclic group with a double bond in its ring and being selected from the group consisting of the compounds represented by Formulae (3) and (4).

Exemplary alkyl or hydroxyalkyl groups, as R^{c}, having 1 to 4 carbon atoms are as with the alkyl or hydroxyalkyl groups, as R^{a}, having 1 to 4 carbon atoms.

R^{c} is preferably a hydrogen atom, methyl group, hydroxymethyl group, 1-hydroxyethyl group, or 2-hydroxyethyl group and is especially preferably a hydrogen atom or methyl group.

Exemplary alkylene groups, as R^{d}, which has 1 to 18 carbon atoms and which may contain a heteroatom are as with the alkylene groups, as R^{b}, which has 1 to 18 carbon atoms and which may contain a heteroatom. Representative examples of R^{d} are also as with the representative examples of R^{b}.

R^{d} is preferably a single bond, an alkylene group having 1 to 6 carbon atoms (more preferably having 1 to 3 carbon atoms), or an oxyalkylene group having 1 to 6 carbon atoms (more preferably having 2 or 3 carbon atoms). R^{d} is more preferably a single bond or oxyethylene group.

Representative examples of the polymerizable unsaturated compounds being represented by Formulae (3) and (4) and containing a bridged alicyclic group with a double bond in its ring (compounds containing a tricyclo[5.2.1.0^{2,6}]-3-decene ring) include dicyclopentenyl (meth)acrylates represented by following Formula (15) [i.e., tricyclo[5.2.1.0^{2,6}]-3-decen-9-yl (meth) acrylates; and tricyclo[5.2.1.0^{2,6}]-3-decen-8-yl (meth)acrylates], dicyclopentenyloxyethyl (meth)acrylates represented by following Formula (16) [i.e., 2-(tricyclo[5.2.1.0^{2,6}]-3-decen-9-yloxy)ethyl (meth)acrylates; and 2-(tricyclo[5.2.1.0^{2,6}]-3-decen-8-yloxy)ethyl (meth)acrylates], dicyclopentenyloxybutyl (meth)acrylates represented by following Formula (17), and dicyclopentenyloxyhexyl (meth)acrylates represented by following Formula (18). Among them, dicyclopentenyl (meth)acrylates and dicyclopentenyloxyethyl (meth)acrylates are especially preferred. In the following formulae, R^{a'} represents a hydrogen atom or a methyl group.

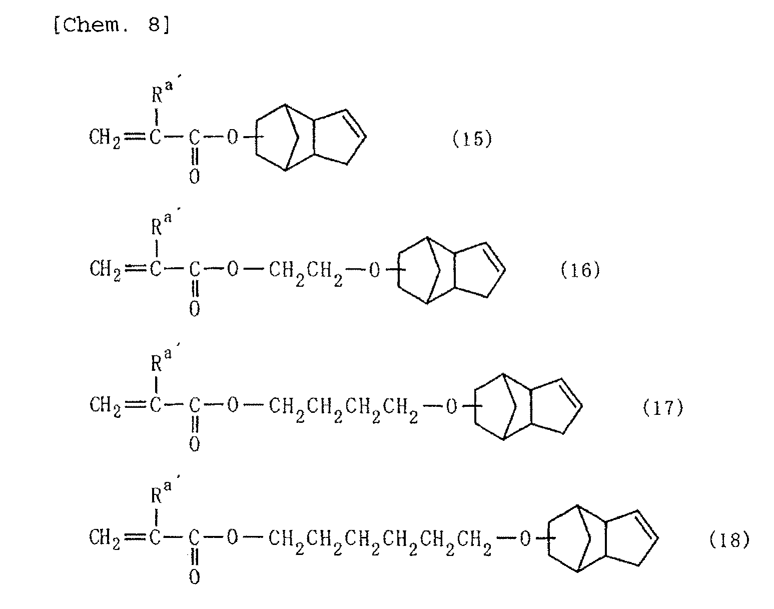

Each of the compound(s) of Formula (3) and the compound(s) of Formula (4) can be used alone or in combination as a mixture in arbitrary proportions. When the two types of compounds are used in combination, the ratio of the compound(s) of Formula (3) to the compound(s) of Formula (4) is preferably from 5:95 to 95:5, more preferably from 10:90 to 90:10, and furthermore preferably from 20:80 to 80:20.

### [Polymerizable Unsaturated Compounds (d)]

The copolymer according to the present invention may further include other (additional) monomeric units in addition to the monomeric units (A), monomeric units (B), and monomeric units (C). Exemplary additional monomeric units herein include monomeric units (D) corresponding to at least one polymerizable unsaturated compound (d) selected from the group of monomers consisting of styrenes (d1) which may be substituted with an alkyl group or a hydroxyl group, unsaturated carboxylic acid esters (d2) represented by Formula (5), N-substituted maleimides (d3) represented by Formula (6), and monocyclic or polycyclic olefins (d4).

Example styrenes (d1) which may be substituted with an alkyl group or a hydroxyl group include styrene, α-methylstyrene, vinyltoluenes, and hydroxystyrenes.

In Formula (5) in the unsaturated carboxylic acid esters (d2) represented by Formula (5), R¹ represents a hydrogen atom or an alkyl group having 1 to 7 carbon atoms; R² represents a linear or branched-chain alkyl group having 1 to 18 carbon atoms, an alkenyl group having 2 to 18 carbon atoms, an aryl group, an aralkyl group, an (R³-O)ₘ-R⁴ group (wherein R³ represents a bivalent hydrocarbon group having 1 to 12 carbon atoms; R⁴ represents hydrogen atom or a hydrocarbon group; and "m" denotes an integer of 1 or more), or a group containing a nonaromatic monocyclic or polycyclic structure.

As R¹, exemplary alkyl groups having 1 to 7 carbon atoms include methyl, ethyl, propyl, isopropyl, butyl, isobutyl, t-butyl, and hexyl groups. R¹ is especially preferably a hydrogen atom or a methyl group.

As R², exemplary linear or branched-chain alkyl groups having 1 to 18 carbon atoms include methyl, ethyl, propyl, isopropyl, butyl, isobutyl, t-butyl, hexyl, octyl, decyl, and dodecyl groups. Exemplary alkenyl groups having 2 to 18 carbon atoms include vinyl, allyl, 3-butenyl, and 5-hexenyl groups. Exemplary aryl groups include phenyl, naphthyl, and tolyl groups. Exemplary aralkyl groups include aralkyl groups having about 7 to 18 carbon atoms, such as benzyl, 1-phenylethyl, 2-phenylethyl, trityl, and 3-phenylpropyl groups.

In the -(R³-O)ₘ-R⁴ group as R², R³ represents a bivalent hydrocarbon group having 1 to 12 carbon atoms; R⁴ represents a hydrogen atom or a hydrocarbon group; and "m" denotes an integer of 1 or more. Exemplary bivalent hydrocarbon groups having 1 to 12 carbon atoms as R³ include linear or branched-chain alkylene groups having 2 to 12 carbon atoms, such as ethylidene, ethylene, isopropylidene, trimethylene, propylene, tetramethylene, and hexamethylene groups, of which those having 2 to 6 carbon atoms are preferred; and bivalent alicyclic hydrocarbon groups having 3 to 6 members, such as cyclohexylene and cyclohexylidene groups. As R⁴, exemplary hydrocarbon groups include aliphatic hydrocarbon groups including alkyl groups such as methyl, ethyl, propyl, isopropyl, butyl, and hexyl groups, of which alkyl groups having 1 to 10 carbon atoms are typified; alicyclic hydrocarbon groups including cycloalkyl groups such as cyclopentyl group and cyclohexyl group, and bridged carbocyclic groups such as norbornyl group (bicyclo[2.2.1]heptyl group) and tricyclo[5.2.1.0^{2,6}]decyl group; aryl groups such as phenyl and naphthyl groups; and bivalent groups composed of two or more of these groups bound to each other. The repetition number "m" is preferably an integer of 1 to 20, more preferably an integer of 1 to 4, and furthermore preferably 1.

As R², exemplary groups containing a nonaromatic monocyclic or polycyclic structure include groups having an alicyclic hydrocarbon skeleton. Exemplary groups having an alicyclic hydrocarbon skeleton include groups represented by following Formula (19):

-X¹-R¹⁷ (19)

wherein R¹⁷ represents an alicyclic hydrocarbon group; and X¹ represents a single bond or a linkage group.

As R¹⁷, exemplary alicyclic hydrocarbon groups include monocyclic alicyclic hydrocarbon groups including cycloalkyl groups which has 5 to 15 members and which may have one or more substituents (e.g., alkyl groups having 1 to 6 carbon atoms), such as cyclopentyl group, cyclohexyl group, methylcyclohexyl group, and trimethylcyclohexyl group; and polycyclic alicyclic hydrocarbon groups (bridged hydrocarbon groups) which has about 6 to 20 carbon atoms and which may have one or more substituents (e.g., alkyl groups having 1 to 6 carbon atoms), such as bicyclo[2.2.1]hept-2-yl group (i.e., norborn-2-yl group), isobornyl group, tricyclo[5.2.1.0^{2,6}]dec-9-yl group, tricyclo[5.2.1.0^{2,6}]dec-8-yl group, tricyclo[4.4.0.1^{2,5}]undec-3-yl group, tricyclo[4.4.0.1^{2,5}]undec-4-yl group, tetracyclo [4.4.0.1^{2,5}.1^{7,10}] dodec-3-yl group, tetracyclo[4.4.0.1^{2,5}.1⁷,¹⁰]dodec-4-yl group, and adamant-1-yl group. Among them, preferred are polycyclic alicyclic hydrocarbon groups (bridged hydrocarbon groups) which has about 6 to 20 carbon atoms and which may have one or more substituents (e.g., alkyl groups having 1 to 6 carbon atoms).

As X¹, exemplary linkage groups include linear or branched-chain alkylene groups having about 1 to 12 carbon atoms, such as methylene, ethylidene, ethylene, isopropylidene, trimethylene, propylene, tetramethylene, and hexamethylene groups, of which those having about 1 to 6 carbon atoms are preferred; bivalent alicyclic hydrocarbon groups having 3 to 6 members, such as cyclohexylene and cyclohexylidene groups; bivalent aromatic hydrocarbon groups having about 6 to 15 carbon atoms, such as phenylene group; oxygen atom (ether bond); sulfur atom (thioether bond); -NH-; carbonyl group (-CO-); and bivalent groups composed of two or more of these bound to each other, including oxyalkylene groups such as -CH₂CH₂O-, -CH₂CH₂CH₂CH₂O-, and - CH₂CH₂CH₂CH₂CH₂CH₂O-. X¹ is typically preferably a single bond, a linear or branched-chain alkylene group having 1 to 6 carbon atoms, an oxyalkylene group, or a group composed of two or more oxyalkylene groups bound to each other.

As R², examples of the group containing a nonaromatic monocyclic or polycyclic structure further include lactone-ring-containing groups. Exemplary lactone-ring-containing groups include groups represented by following Formula (20):

-X²-R¹⁸ (20)

wherein R¹⁸ represents a cyclic group containing a lactone ring; and X² represents a single bond or a linkage group.

As R¹⁸, exemplary cyclic groups containing a lactone ring include monocyclic groups composed of a lactone ring having 5 to 15 members alone, such as γ-butyrolactone ring, δ-valerolactone ring, and ε-caprolactone ring, of which those composed of a lactone ring having 5 or 6 members are preferred; and polycyclic groups composed of a lactone ring having 5 to 15 members (preferably 5 or 6 members) fused with an alicyclic ring, such as norbornane lactone ring (i.e., 3-oxatricyclo[4.2.1.0^{4,8}]nonan-2-one ring), 6-oxabicyclo[3.2.1]octan-7-one ring, 8-oxabicyclo[4.3.0^{1,6}]nonan-7-one ring, and 4-oxatricyclo[5.2.1.0^{2,6}]decan-3-one ring. Exemplary linkage groups as X² are as with the exemplified linkage groups as X¹.

As R², exemplary groups containing a nonaromatic monocyclic or polycyclic structure further include groups containing a cyclic ether skeleton, other than the groups containing 3,4-epoxytricyclo[5.2.1.0^{2,6}]decane ring. Examples of the groups containing a cyclic ether skeleton include groups represented by following Formula (21):

-X³-R¹⁹ (21)

wherein R¹⁹ represents a cyclic group containing a cyclic ether skeleton; and X³ represents a single bond or a linkage group.

As R¹⁹, exemplary cyclic groups containing a cyclic ether skeleton include oxiranyl group (epoxy group), 2-methyl-2-oxiranyl group, 3-methyl-2-oxiranyl group, oxetanyl group, 3-methyl-3-oxetanyl group, 3-ethyl-3-oxetanyl group, tetrahydrofuranyl group, tetrahydropyranyl group, and other cyclic groups having 3 to 8 members and including a cyclic ether skeleton alone; and 3,4-epoxycyclohexyl group and other polycyclic groups composed of a single ring having 3 to 8 members and including a cyclic ether skeleton (of which oxirane ring is preferred), which ring is fused with a monocyclic or polycyclic alicyclic ring. Exemplary linkage groups as X³ are as with the exemplified linkage groups as X¹.

Representative examples of the unsaturated carboxylic acid esters represented by Formula (5) include alkyl (meth)acrylates whose alkyl moiety having 1 to 18 carbon atoms, such as methyl (meth)acrylates, ethyl (meth)acrylates, propyl (meth)acrylates, butyl (meth)acrylates, isobutyl (meth)acrylates, hexyl (meth)acrylates, octyl (meth)acrylates, 2-ethylhexyl (meth)acrylates, and stearyl (meth)acrylates; aryl (meth)acrylates such as phenyl (meth)acrylates; aralkyl (meth)acrylates such as benzyl (meth)acrylates; hydroxylalkyl (meth)acrylates such as 2-hydroxyethyl (meth)acrylates and 2-hydroxypropyl (meth)acrylates; alkyl- or aryl-substituted oxypolyalkylene glycol (meth)acrylates such as methoxydiethylene glycol (meth)acrylates, ethoxydiethylene glycol (meth)acrylates, isooctyloxydiethylene glycol (meth)acrylates, phenoxytriethylene glycol (meth)acrylates, and methoxytriethylene glycol (meth)acrylates; aryloxyalkyl (meth)acrylates such as 2-phenyloxyethyl (meth)acrylates; (meth)acrylic acid ester containing an alicyclic carbon ring, such as trimethylcyclohexyl (meth)acrylates, isobornyl (meth)acrylates, tricyclo[5.2.1.0^{2,6}]dec-9-yl (meth)acrylates, tricyclo[5.2.1,0^{2,6}]dec-8-yl (meth)acrylates, 2-(tricyclo[5.2.1.0^{2,6}]dec-9-yloxy)ethyl (meth)acrylates, 2-(tricyclo[5.2.1.0^{2,6}]dec-8-yloxy)ethyl (meth)acrylates, 4-(tricyclo[5.2.1.0^{2,6}]dec-9-yloxy)butyl (meth)acrylates, 4-(tricyclo[5.2.1.0^{2,6}]dec-8-yloxy)butyl (meth)acrylates, 6-(tricyclo[5.2.1.0^{2,6}]dec-9-yloxy)hexyl (meth)acrylates, 4-(tricyclo[5.2.1.0^{2,6}]dec-8-yloxy)hexyl (meth)acrylates, and adamantyl (meth)acrylates; (meth)acrylic acid esters containing a lactone ring, such as γ-butyrolactone-2-yl (meth)acrylates, γ-butyrolactone-3-yl (meth)acrylates, γ-butyrolactone-4-yl (meth)acrylates, and norbornane lactone (meth)acrylates; and (meth)acrylic acid esters containing a cyclic ether skeleton [other than the compounds represented by Formulae (1) and (2)], such as glycidyl (meth)acrylates, oxetanyl (meth)acrylates, 3-methyl-3-oxetanyl (meth)acrylates, 3-ethyl-3-oxetanyl (meth)acrylates, and tetrahydrofurfuryl (meth)acrylates.

Of such unsaturated carboxylic acid esters represented by Formula (5), preferred are aralkyl (meth)acrylates; hydroxylalkyl (meth)acrylates [of which hydroxyalkyl (meth)acrylates whose alkyl moiety having 2 to 6 carbon atoms are preferred]; alkyl (meth)acrylates whose alkyl moiety having 1 to 4 carbon atoms; and (meth)acrylic acid esters containing a cyclic ether skeleton [other than the compounds represented by Formulae (1) and (2)].

In the N-substituted maleimides (d3) represented by Formula (6), R⁵ in Formula (6) represents a substituted or unsubstituted phenyl group, a substituted or unsubstituted aralkyl group, or a substituted or unsubstituted cycloalkyl group. Examples of substituents herein include alkyl groups having 1 to 4 carbon atoms, such as methyl group; alkoxy groups having 1 to 4 carbon atoms, such as methoxy group; hydroxyl groups; and carboxyl groups. Exemplary substituted or unsubstituted phenyl groups include phenyl, naphthyl, and tolyl groups. Exemplary substituted or unsubstituted aralkyl groups include benzyl, p-methylbenzyl, and 2-phenylethyl groups. Exemplary substituted or unsubstituted cycloalkyl groups include cycloalkyl groups having 3 to 8 members, such as cyclopropyl, cyclopentyl, cyclohexyl, and cyclooctyl groups.

Representative examples of the N-substituted maleimides represented by Formula (6) include N-cycloalkylmaleimides such as N-cyclopentylmaleimide, N-cyclohexylmaleimide, and N-cyclooctylmaleimide; N-arylmaleimides such as N-phenylmaleimide; and N-aralkylmaleimides such as N-benzylmaleimide.

Examples of the monocyclic or polycyclic olefins (d4) include monocyclic olefins such as cyclohexene; and polycyclic olefins including substituted or unsubstituted bicyclo[2.2.1]hept-2-enes such as bicyclo[2.2.1]hept-2-ene, 5-methylbicyclo[2.2.1]hept-2-ene, 5-ethylbicyclo[2.2.1]hept-2-ene, 5-hydroxybicyclo[2.2.1]hept-2-ene, 5-hydroxymethylbicyclo[2.2.1]hept-2-ene, and 5-t-butoxybicyclo[2.2.1]hept-2-ene.

The copolymer according to the present invention may further include, in addition to or instead of the monomeric units (D), other monomeric units as additional monomeric units other than the monomeric units (A), monomeric units (B), and monomeric units (C). Examples of such additional monomeric units include monomeric units corresponding to unsaturated dicarboxylic acid diesters such as dimethyl maleate; and monomeric units corresponding to other polymerizable unsaturated compounds than those mentioned above, such as acrylonitrile, methacrylonitrile, vinyl chloride, vinylidene chloride, acrylamide, methacrylamide, vinyl acetate, 1,3-butadiene, and isoprene.

The monomeric units (A) in the copolymer according to the present invention have the function of imparting alkali-solubility to the polymer. This allows the polymer to become soluble in an alkaline aqueous solution (developer) upon development. Upon exposure, the monomeric units (A) exhibit the functions of being crosslinked by the action of a crosslinking agent or reacting typically with epoxy groups and/or oxetane-ring-containing groups in the polymer molecule, thereby allowing the polymer (copolymer) to be cured, giving hardness, necessary typically as resists, to the cured film, and, in addition, allowing the polymer to become insoluble in an alkali. The monomeric units (B) have the function upon exposure of being crosslinked by the action of the crosslinking agent or reacting with alkali-soluble groups (for example, carboxyl groups and phenolic hydroxyl groups) present in the polymer molecule, thereby allowing the polymer (copolymer) to be cured, giving hardness and etching resistance, necessary typically as resists, to the cured film, and, in addition, allowing the polymer to become insoluble in an alkali. The monomeric units (C) have the function of imparting high hardness, solvent resistance, and thermal stability to the cured film, because the double bond in the ring of the bridged alicyclic group is involved in reactions upon curing. The monomeric units (D) have the function of imparting hardness, necessary typically as resists, to the cured film. In addition, monomers corresponding to the monomeric units (D) have the function of smoothing the copolymerization reaction. Some types of monomeric units (D) have the function of further improving the hardness of the cured film typically through crosslinking reactions.

The contents of the respective monomeric units in the copolymer according to the present invention can be chosen as appropriate according to the intended use and desired properties. The content of the monomeric units (A) in the copolymer is typically about 1 to 90 percent by weight, preferably about 2 to 80 percent by weight, and more preferably about 3 to 50 percent by weight, based on the total weight of monomeric units constituting the polymer. The content of the monomeric units (B) in the copolymer is typically about 5 to 98.5 percent by weight, preferably about 10 to 90 percent by weight, and more preferably about 30 to 90 percent by weight, based on the total weight of monomeric units constituting the polymer. The content of the monomeric units (C) in the copolymer is typically about 0.5 to 50 percent by weight, preferably about 1 to 40 percent by weight, more preferably about 1 to 30 percent by weight, based on the total weight of monomeric units constituting the polymer. The content of the monomeric units (D) in the copolymer is generally about 0 to 70 percent by weight (for example about 1 to 70 percent by weight), preferably about 0 to 60 percent by weight (for example about 3 to 60 percent by weight), and more preferably about 0 to 50 percent by weight (for example about 5 to 50 percent by weight), based on the total weight of monomeric units constituting the polymer. The copolymer, when containing the respective monomeric units in contents within the above-specified ranges, is very stably synthetically prepared and gives a composition which has very good storage stability, which shows very good developability when used as a radiation-sensitive resin, and which gives a cured film with very satisfactory properties such as solvent resistance, thermal stability, etching resistance, hardness, and transparency.

The copolymer according to the present invention can be produced by subjecting a monomer mixture to copolymerization, which monomer mixture includes the polymerizable unsaturated compound(s) (a) containing a carboxyl group or an acid anhydride group, the polymerizable unsaturated compound(s) (b) containing a bridged alicyclic group with an epoxy group on its ring, the polymerizable unsaturated compound(s) (c) containing a bridged alicyclic group with a double bond in its ring, and, according to necessity, the polymerizable unsaturated compound(s) (d), and other polymerizable unsaturated compound(s).

A polymerization initiator for use in the copolymerization can be any of regular or common radical polymerization initiators, and examples thereof include azo compounds such as 2,2'-azobisisobutyronitrile, 2,2'-azobis(2,4-dimethylvaleronitrile), 2,2'-azobis(4-methoxy-2,4-dimethylvaleronitrile), dimethyl-2,2'-azobis(2--methyl propionate), diethyl-2,2'-azobis(2-methyl propionate), and dibutyl-2,2'-azobis(2-methyl propionate); organic peroxides such as benzoyl peroxide, lauroyl peroxide, t-butyl peroxypivalate, and 1,1-bis(t-butylperoxy)cyclohexane; and hydrogen peroxide. A peroxide, when used as a radical polymerization initiator, may be used in combination with a reducing agent to form a redox initiator. Among the above initiators, azo initiators are preferred, of which 2,2'-azobisisobutyronitrile, 2,2'-azobis(2,4-dimethylvaleronitrile), or dimethyl-2,2'-azobis(2-methyl propionate) is more preferred.

The polymerization initiator may be used in an amount of generally about 0.5 to 20 percent by weight, and preferably about 1 to 15 percent by weight, based on the total weight of the monomers (total monomer components) and polymerization initiator, though the amount can be chosen as appropriate within a range not adversely affecting smooth copolymerization.

The copolymerization can be performed according to a customary process adopted in the production of styrenic polymers and acrylic polymers, such as solution polymerization, bulk polymerization, suspension polymerization, bulk-suspension polymerization, or emulsion polymerization. Among them, solution polymerization is preferred. Each of the monomers and the polymerization initiator may be fed at once to the reaction system, or part or all thereof may be added dropwise to the reaction system. Exemplary processes adoptable herein include a polymerization process of adding a solution of the polymerization initiator in a polymerization solvent dropwise to a mixture of the monomers and the polymerization solvent held at a constant temperature; and a dropping polymerization process of adding a solution of the monomers and the polymerization initiator dissolved in a polymerization solvent dropwise to the polymerization solvent held at a constant temperature.

The polymerization solvent can be chosen as appropriate according typically to the monomer composition. Exemplary polymerization solvents include ethers (e.g., chain ethers including diethyl ether; 3-methoxy-1-butanol, propylene glycol monomethyl ether, diethylene glycol ethyl methyl ether, dipropylene glycol dimethyl ether, tripropylene glycol methyl ether, propylene glycol n-propyl ether, dipropylene glycol n-propyl ether, propylene glycol n-butyl ether, dipropylene glycol n-butyl ether, tripropylene glycol n-butyl ether, propylene glycol phenyl ether, and other glycol ethers, and cyclic ethers such as tetrahydrofuran and dioxane), esters (e.g., methyl acetate, ethyl acetate, butyl acetate, ethyl lactate, ethyl lactate acetate, methyl lactate acetate, cyclohexanol acetate, furfuryl alcohol acetate, ethyl 3-ethoxypropionate, and dimethyl 2-acetoxy-2-methylmalonate; and glycol diesters and glycol ether esters, such as 3-methoxybutyl acetate, propylene glycol diacetate, 1,6-hexanediol diacetate, 1,3-butanediol diacetate, 1,3-butylene glycol diacetate, 1,4-butanediol diacetate, propylene glycol monomethyl ether acetate, and dipropylene glycol methyl ether acetate), ketones (e.g., acetone, methyl ethyl ketone, methyl isobutyl ketone, and cyclohexanone), amides (e.g., N,N-dimethylacetamide and N,N-dimethylformamide), sulfoxides (e.g., dimethyl sulfoxide), alcohols (e.g., methanol, ethanol, and propanol), hydrocarbons (e.g., aromatic hydrocarbons such as benzene, toluene, and xylene; aliphatic hydrocarbons such as hexane; and alicyclic hydrocarbons such as cyclohexane), lactones (e.g., γ-butyrolactone), and mixtures of them. The polymerization temperature can be chosen as appropriate within the range typically from about 30°C to 150°C.

The process gives a copolymer. The copolymer has a weight-average molecular weight of typically about 2000 to 50000, preferably about 3500 to 40000, and more preferably about 4000 to 30000 and has a degree of dispersion (the ratio of the weight-average molecular weight Mw to the number-average molecular weight Mn) of typically about 1 to 3 and preferably about 1 to 2.5.

The copolymer has an acid value within the range typically of 20 to 550 mg-KOH/g, preferably 40 to 400 mg-KOH/g, and more preferably 50 to 200 KOH/g.

The resulting polymerization mixture (polymerization reaction solution) obtained by the process can be formed into a curable resin composition such as a radiation-sensitive resin composition by controlling the solids content of the polymerization mixture and/or subjecting the mixture to filtration according to necessity, and thereafter adding suitable components according to the intended use. Alternatively, the curable resin composition such as a radiation-sensitive resin composition can also be obtained by purifying the polymer, produced as a result of polymerization, through precipitation or reprecipitation, and dissolving the purified polymer, together with suitable components according to the intended use, in a solvent.

A solvent for use in precipitation or reprecipitation of the polymer can be any of organic solvents and water, and mixtures of them. Exemplary organic solvents include hydrocarbons (e.g., aliphatic hydrocarbons such as pentane, hexane, heptane, and octane; alicyclic hydrocarbons such as cyclohexane and methylcyclohexane; and aromatic hydrocarbons such as benzene, toluene, and xylenes), halogenated hydrocarbons (e.g., halogenated aliphatic hydrocarbons such as methylene chloride, chloroform, and carbon tetrachloride; and halogenated aromatic hydrocarbons such as chlorobenzene and dichlorobenzene), nitro compounds (e.g., nitromethane and nitroethane), nitriles (e.g., acetonitrile and benzonitrile), ethers (e.g., chain ethers such as diethyl ether, diisopropyl ether, and dimethoxyethane; and cyclic ethers such as tetrahydrofuran and dioxane), ketones (e.g., acetone, methyl ethyl ketone, and diisobutyl ketone), esters (e.g., ethyl acetate and butyl acetate), carbonates (e.g., dimethyl carbonate, diethyl carbonate, ethylene carbonate, and propylene carbonate), alcohols (e.g., methanol, ethanol, propanol, isopropyl alcohol, and butanol), carboxylic acids (e.g., acetic acid), and mixtures of these solvents.

### [Curable Resin Compositions]

A curable resin composition according to an embodiment of the present invention contains the copolymer according to the present invention. The curable resin composition according to the present invention may further contain one or more other components according to the intended use. Exemplary other components include solvents; curing agents and curing catalysts for the curing (crosslinking) of epoxy groups; photoinitiators for the polymerization of polymerizable unsaturated groups; and free-radically reactive diluents (diluting monomers or oligomers).

The curable resin composition contains the copolymer according to the present invention in a content of typically about 5 to 90 percent by weight, preferably about 10 to 80 percent by weight, and more preferably about 30 to 75 percent by weight, based on the total weight of the curable resin composition except for the solvent.

The solvent can be any of the solvents listed as the polymerization solvent, and of other solvents according to the intended use. Among them, esters and ketones are preferred. Each of different solvents can be used alone or in combination. The curable resin composition contains solvent(s) in a content of preferably about 60 to 90 percent by weight and more preferably about 70 to 85 percent by weight, based on the total weight of the curable resin composition, typically for better coating properties.

Examples of the curing agent include epoxy resins, phenolic resins, and acid anhydrides.

The epoxy resins usable herein are not especially limited, as long as having two or more epoxy groups per one molecule (i.e., as long as being multifunctional epoxy resins), and examples thereof include bisphenol-A epoxy resins, bisphenol-F epoxy resins, bisphenol-S epoxy resins, phenol-novolak epoxy resins, cresol-novolak epoxy resins, brominated bisphenol-A, and other glycidyl ether epoxy resins, dimer acid diglycidyl esters, and diglycidyl phthalate. Exemplary epoxy resins usable herein further include multifunctional alicyclic epoxy resins. Each of different epoxy resins can be used alone or in combination. The epoxy resin(s) is used in an amount chosen within the range of typically about 0 to 30 parts by weight (for example about 5 to 30 parts by weight) per 100 parts by weight of the copolymer according to the present invention.

Examples of the phenolic resins usable herein include resins prepared by polymerizing phenol or cresol with formaldehyde. In addition to the these components, the resins may further contain one or more copolymerized components including alicyclic compounds or aromatic compounds such as dicyclopentadiene, naphthalene, or biphenyl. Such phenolic resins may be added in an amount chosen as appropriate within the range typically of about 0 to 200 parts by weight (for example about 5 to 200 parts by weight) per 100 parts by weight of the copolymer according to the present invention. The phenolic resins may also be used in such an amount that the amount of phenolic hydroxyl groups be 0 to 1.8 moles (for example about 0.1 to 1.8 moles) per 1 mole of epoxy groups present in the copolymer according to the present invention.

Examples of the acid anhydrides include polybasic acid anhydrides such as phthalic anhydride, trimellitic anhydride, pyromellitic anhydride, benzophenonetetracarboxylic anhydride, Δ⁴-tetrahydrophthalic anhydride, 4-methyl-Δ⁴-tetrahydrophthalic anhydride, 3-methyl-Δ⁴-tetrahydrophthalic anhydride, nadic anhydride, methylnadic anhydride, hydrogenated methylnadic anhydride, 4-(4-methyl-3-pentenyl)tetrahydrophthalic anhydride, succinic anhydride, adipic anhydride, maleic anhydride, sebacic anhydride, dodecanedioic anhydride, methylcyclohexenetetracarboxylic anhydride, dodecenylsuccinic anhydride, hexahydrophthalic anhydride, 4-methylhexahydrophthalic anhydride, 3-methylhexahydrophthalic anhydride, vinyl ether-maleic anhydride copolymers, and alkylstyrene-maleic anhydride copolymers. Such acid anhydrides may be used in an amount chosen as appropriate within the range of typically 0 to 160 parts by weight (e.g., about 20 to 160 parts by weight) per 100 parts by weight of the copolymer according to the present invention. The acid anhydrides may also be used in an amount of typically 0 to 1.3 equivalents (e.g., about 0.2 to 1.3 equivalents) per 1 equivalent of epoxy groups present in the copolymer according to the present invention.

Such phenolic resins and/or acid anhydrides, when used as curing agents, are preferably used in combination with one or more accelerators. The accelerators are not especialy limited, as long as being customary ones, and examples thereof include diazabicycloundecene accelerators (diazabicycloalkenes); phosphorus-containing accelerators such as phosphoric esters and phosphines; and amine accelerators such as tertiary amines and quaternary ammonium salts. Exemplary diazabicycloundecene accelerators include 1,8-diazabicyclo[5.4.0]undecene-7 (DBU) and salts thereof, of which organic acid salts, such as octyl acid salts, sulfonic acid salt, orthophthalic acid salt, and carbolic acid salt, of 1,8-diazabicyclo[5.4.0]undecene-7 are preferred. Specific examples of other accelerators than those mentioned above include known compounds including tertiary amines such as benzyldimethylamine and 2,4,6-tris(dimethylaminomethyl)phenol; imidazoles such as 2-ethyl-4-methylimidazole and 1-cyanoethyl-2-ethyl-4-methylimidazole; phosphorus compounds (e.g., phosphonium salts) containing no aromatic moiety, such as tetra-n-butylphosphonium O,O-diethylphosphorodithioate; tertiary amine salts; quaternary ammonium salts; and metal salts such as tin octylate (tin octoate). The organic acid salts of diazabicycloalkenes are usable in combination with one or more metal salts of organic acids. Exemplary metal salts of organic acids include tin octylate, zinc octylate, tin naphthenate, and zinc naphthenate. Such accelerators may be used in an amount chosen as appropriate within the range of typically 0 to 3 parts by weight (e.g., about 0.05 to 3 parts by weight) per 100 parts by weight of the copolymer according to the present invention.

Examples of the curing catalysts include heat-activatable (heat-sensitive) cationic-polymerization initiators and photo-activatable cationic polymerization initiators. Each of these can be used alone or in combination. The heat-activatable cationic-polymerization initiators are components releasing, through heating, a substance that initiates cationic polymerization. Exemplary heat-activatable cationic-polymerization initiators include aryldiazonium salts [e.g., PP-33 [supplied by ADEKA CORPORATION]], aryliodonium salts, arylsulfonium salts [e.g., FC-509 and FC-520 [both supplied by 3M Company], UVE1014 [supplied by General Electric Company], CP-66 and CP-77 [both supplied by ADEKA CORPORATION], SI-60L, SI-80L, SI-100L, and SI-110L [each supplied by Sanshin Chemical Industry Co., Ltd.]], and allene-ion complexes [e.g., CG-24-61 [supplied by Ciba Geigy Ltd.]]. Exemplary heat-activatable cationic-polymerization initiators further include systems composed of a silanol or phenol in combination with a chelate compound, which chelate compound being formed between a metal such as aluminum or titanium and an acetoacetic acid ester or diketone. Exemplary chelate compounds include tris(acetylacetonato)aluminum and tris(ethyl acetoacetato)aluminum. Exemplary silanols or phenols include silanol-containing compounds such as triphenylsilanol; and acidic-hydroxyl-containing compounds such as bisphenol-S. Such heat-activatable cationic-polymerization initiator are used in an amount of typically 0 to 20 parts by weight (e.g., about 0.01 to 20 parts by weight) per 100 parts by weight of the copolymer according to the present invention.

The photo-activatable cationic polymerization initiators are components releasing, through irradiation with active energy rays, a substance that initiates cationic polymerization. Exemplary photo-activatable cationic polymerization initiators include hexafluoroantimonate salts, pentafluorohydroxyantimonate salts, hexafluorophosphate salts, and hexafluoroarsenate salts. Such photo-activatable cationic polymerization initiators are used in an amount of typically 0 to 20 parts by weight (e.g., about 0.01 to 20 parts by weight) per 100 parts by weight of the copolymer according to the present invention.

The photoinitiators for the polymerization typically of polymerizable unsaturated groups in the copolymer according to the present invention are not especially limited, but preferred examples thereof include polymerization initiators of acetophenones [e.g., diethoxyacetophenone, 2-hydroxy-2-methyl-1-phenylpropan-1-one, 1-hydroxycyclohexyl phenyl ketone, benzil dimethyl ketal, and 2-benzyl-2-dimethylamino-1-(4-morpholinophenyl)butan-1-one], benzophenones, benzoins, thioxanthones, biimidazoles, oximes, triazines, and acylphosphine oxides. Among them, acetophenone polymerization initiators are preferred.

One or more photoinitiator aids can be used in combination with such photoinitiators. Exemplary photoinitiator aids include amine photoinitiator aids such as methyl 4-dimethylaminobenzoate and 4,4'-bis(diethylamino)benzophenone; and aromatic heteroacetic acid photoinitiator aids such as (phenylthio)acetic acid, (methylphenylthio)acetic acid, (dimethylphenylthio)acetic acid, phenoxyacetic acid, and naphthoxyacetic acid.

Such photoinitiators are used in an amount of typically about 0.1 to 40 parts by weight and preferably about 1 to 30 parts by weight, per 100 parts by weight of the total of the copolymer according to the present invention and the after-mentioned radically reactive diluent.

Examples of the radically reactive diluents (diluting monomers or oligomers) include (meth)acrylic acid esters of aliphatic alcohols or alicyclic alcohols, such as isobornyl (meth)acrylates, cyclohexyl (meth)acrylates, and octyl (meth)acrylates; hydroxyalkyl (meth)acrylates such as 2-hydroxyethyl (meth)acrylates and 3-hydroxypropyl (meth)acrylates; glycol mono- or di-(meth)acrylates, such as ethylene glycol mono- or di-(meth)acrylates, methoxyethylene glycol mono- or di-(meth)acrylates, tetramethylene glycol mono- or di-(meth)acrylates, and tripropylene glycol mono- or di-(meth)acrylates; epoxy-containing (meth)acrylates such as 3,4-epoxycyclohexylmethyl (meth)acrylates and glycidyl (meth)acrylates; and (meth)acrylates of polyols such as glycerol di(meth)acrylates, trimethylolpropane tri(meth)acrylates, pentaerythritol tri- or tetra-(meth)acrylates, and dipentaerythritol hexa(meth)acrylates, and alkylene oxide adducts of them. Such multifunctional radically reactive diluents function as crosslinking agents. Each of different radically reactive diluents can be used alone or in combination.

The curable resin composition may contain radically reactive diluents in an amount of typically about 1 to 70 percent by weight, preferably about 5 to 60 percent by weight, and more preferably about 15 to 55 percent by weight, based on the total amount of the copolymer according to the present invention and the radically reactive diluents.

The curable resin composition may further contain other components such as resins other than those mentioned above, polyols, photosensitizers, light-activatable acid generators, fillers, colorants, pigment dispersants, antioxidants, ultraviolet absorbers, antiflocculants, flocculants, chain-transfer agents, adhesion imparting agents, and leveling agents, according to the intended use and desired properties.

The curable resin composition can be prepared by blending and homogeneously stirring the copolymer according to the present invention and the other components, and, where necessary, filtrating the resulting mixture.

The curable resin composition can give, through curing by the action of light (e.g., ultraviolet rays) and/or heat, a cured article [cured film (e.g., transparent film)] excellent in properties such as thermal stability, resistance to bases, solvent resistance, and hardness. The transparent film is useful as an overcoat and is adoptable to a touch panel. The curable resin composition can also give a desired pattern by applying the curable resin composition to a base material (such as a substrate), prebaking the applied coat (to remove the solvent), irradiating the film with light (e.g., ultraviolet rays) through a mask to cure exposed portions, dissolving unexposed portions in an alkaline aqueous solution (developer) and thereby developing a latent pattern. The developer can be any of known or customary developers. After the development, the film is rinsed with water and, where necessary, can be subjected to post-baking.

The curable resin composition containing the copolymer according to the present invention is usable as materials for the formation typically of liquid resists, dry films, insulating films, photosensitive materials, and liquid crystal display materials such as liquid crystal display photospacers, materials for the formation of liquid crystal display ribs, overcoats, color resists for the formation of color filters, and TFT insulating films.

### EXAMPLES

The present invention will be illustrated in further detail with reference to several working examples below. It should be noted, however, that these examples are never construed to limit the scope of the present invention. Weight-average molecular weights and degrees of dispersion of copolymers were measured through gel permeation chromatography (GPC) and are indicated in terms of a polystyrene.

### EXAMPLE 1

A copolymer solution [having a solids content (nonvolatile content; NV) of 35.8 percent by weight] was prepared by placing 270 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 294 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 14 g of dicyclopentenyl acrylate [a compound represented by Formula (15) in which Ra' is H], 42 g of acrylic acid, and 30 g of azobisdimethylvaleronitrile in 350 g of methoxybutyl acetate. The resulting copolymer had an acid value (dry) of 90.5 KOH-mg/g, a weight-average molecular weight (Mw) of 9500, and a degree of dispersion (Mw/Mn) of 1.8.

### EXAMPLE 2

A copolymer solution [having a solids content (NV) of 36.5 percent by weight] was prepared by placing 259 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture has been prepared by dissolving 266 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 28 g of dicyclopentenyloxyethyl acrylate [a compound represented by Formula (16) in which Ra' is H], 56 g of methacrylic acid, and 41 g of azobisdimethylvaleronitrile in 350 g of methoxybutyl acetate. The resulting copolymer had an acid value (dry) of 100.4 KOH-mg/g, a weight-average molecular weight (Mw) of 7600, and a degree of dispersion (Mw/Mn) of 2.1.

### EXAMPLE 3

A copolymer solution [having a solids content (NV) of 36.2 percent by weight] was prepared by placing 269 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 291 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 18 g of dicyclopentenyl acrylate [a compound represented by Formula (15) in which Ra' is H], 42 g of methacrylic acid, and 31 g of azobisdimethylvaleronitrile in 350 g of methoxybutyl acetate. The resulting copolymer had an acid value (dry) of 75.3 KOH-mg/g, a weight-average molecular weight (Mw) of 8200, and a degree of dispersion (Mw/Mn) of 1.9.

### EXAMPLE 4

A copolymer solution [having a solids content (NV) of 35.4 percent by weight] was prepared by placing 280 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 249 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 53 g of dicyclopentenyloxyethyl acrylate [a compound represented by Formula (16) in which Ra' is H], 49 g of acrylic acid, and 20 g of azobisdimethylvaleronitrile in 350 g of methoxybutyl acetate. The resulting copolymer had an acid value (dry) of 107.1 KOH-mg/g, a weight-average molecular weight (Mw) of 11100, and a degree of dispersion (Mw/Mn) of 2.2.

### EXAMPLE 5

A copolymer solution [having a solids content (NV) of 35.2 percent by weight] was prepared by placing 284 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 238 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 11 g of dicyclopentenyl methacrylate [a compound represented by Formula (15) in which Ra' is CH₃], 56 g of methacrylic acid, 46 g of styrene, and 16 g of azobisdimethylvaleronitrile in 350 g of methoxybutyl acetate. The resulting copolymer had an acid value (dry) of 107.1 KOH-mg/g, a weight-average molecular weight (Mw) of 14100, and a degree of dispersion (Mw/Mn) of 2.2.

### EXAMPLE 6

A copolymer solution [having a solids content (NV) of 35.7 percent by weight] was prepared by placing 267 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 217 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 46 g of dicyclopentenyloxyethyl methacrylate [a compound represented by Formula (16) in which Ra' is CH₃], 35 g of acrylic acid, 53 g of N-cyclohexylmaleimide, and 33 g of azobisdimethylvaleronitrile in 350 g of methoxybutyl acetate. The resulting copolymer had an acid value (dry) of 101.4 KOH-mg/g, a weight-average molecular weight (Mw) of 8900, and a degree of dispersion (Mw/Mn) of 2.2.

### EXAMPLE 7

A copolymer solution [having a solids content (NV) of 36.3 percent by weight] was prepared by placing 258 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 182 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 28 g of dicyclopentenyl acrylate [a compound represented by Formula (15) in which Ra' is H], 42 g of methacrylic acid, 53 g of oxetane methacrylate, 46 g of methyl methacrylate, and 42 g of azobisdimethylvaleronitrile in 350 g of methoxybutyl acetate. The resulting copolymer had an acid value (dry) of 73.9 KOH-mg/g, a weight-average molecular weight (Mw) of 7300, and a degree of dispersion (Mw/Mn) of 2.1.

### EXAMPLE 8

A copolymer solution [having a solids content (NV) of 36.6 percent by weight] was prepared by placing 255 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 221 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 14 g of dicyclopentenyl methacrylate [a compound represented by Formula (15) in which Ra' is CH₃], 28 g of acrylic acid, 46 g of N-cyclohexylmaleimide, 42 g of benzyl methacrylate, and 45 g of azobisdimethylvaleronitrile in 350 g of methoxybutyl acetate. The resulting copolymer had an acid value (dry) of 73.3 KOH-mg/g, a weight-average molecular weight (Mw) of 7100, and a degree of dispersion (Mw/Mn) of 1.9.

### EXAMPLE 9

A copolymer solution [having a solids content (NV) of 35.6 percent by weight] was prepared by placing 272 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 203 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 28 g of dicyclopentenyloxyethyl methacrylate [a compound represented by Formula (16) in which Ra' is CH₃], 42 g of methacrylic acid, 28 g of hydroxyethyl methacrylate, 28 g of styrene, 21 g of methyl methacrylate, and 28 g of azobisdimethylvaleronitrile in 350 g of methoxybutyl acetate. The resulting copolymer had an acid value (dry) of 59.3 KOH-mg/g, a weight-average molecular weight (Mw) of 11300, and a degree of dispersion (Mw/Mn) of 2.0.

### EXAMPLE 10

A copolymer solution [having a solids content (NV) of 35.4 percent by weight] was prepared by placing 281 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 238 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 18 g of dicyclopentenyloxyethyl acrylate [a compound represented by Formula (16) in which Ra' is H], 39 g of methacrylic acid, 14 g of hydroxyethyl methacrylate, 42 g of benzyl methacrylate, and 19 g of azobisdimethylvaleronitrile in 350 g of methoxybutyl acetate. The resulting copolymer had an acid value (dry) of 76.3 KOH-mg/g, a weight-average molecular weight (Mw) of 13600, and a degree of dispersion (Mw/Mn) of 2.2.

### COMPARATIVE EXAMPLE 1

A copolymer solution [having a solids content (NV) of 35.5 percent by weight] was prepared by placing 277 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 301 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 49 g of methacrylic acid, and 23 g of azobisdimethylvaleronitrile in 350 g of methoxybutyl acetate. The resulting copolymer had an acid value (dry) of 69.8 KOH-mg/g, a weight-average molecular weight (Mw) of 12300, and a degree of dispersion (Mw/Mn) of 2.1.

### COMPARATIVE EXAMPLE 2

A copolymer solution [having a solids content (NV) of 35.9 percent by weight] was prepared by placing 269 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 270 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 81 g of acrylic acid, and 31 g of azobisdimethylvaleronitrile in 350 g of methoxybutyl acetate. The resulting copolymer had an acid value (dry) of 88.3 KOH-mg/g, a weight-average molecular weight (Mw) of 9200, and a degree of dispersion (Mw/Mn) of 1.8.

### COMPARATIVE EXAMPLE 3

A copolymer solution [having a solids content (NV) of 35.3 percent by weight] was prepared by placing 281 g of methoxybutyl acetate in a separable flask having an inner capacity of 1 liter and equipped with a stirrer, a thermometer, a reflux condenser, a dropping funnel, and a nitrogen inlet tube; raising the temperature to 80°c; thereafter adding a solution mixture dropwise over 5 hours; and aging for further 3 hours. The solution mixture had been prepared by dissolving 231 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 35 g of methacrylic acid, 25 g of hydroxyethyl methacrylate, 49 g of N-cyclohexylmaleimide, and 19 g of azobisdimethylvaleronitrile in 350 g of methoxybutyl acetate. The resulting copolymer had an acid value (dry) of 176.2 KOH-mg/g, a weight-average molecular weight (Mw) of 10400, and a degree of dispersion (Mw/Mn) of 2.1.

### COMPARATIVE EXAMPLE 4

A copolymer solution [having a solids content (NV) of 36.0 percent by weight] was prepared by placing 266 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 252 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 46 g of acrylic acid, 14 g of hydroxyethyl methacrylate, 39 g of methyl methacrylate, and 34 g of azobisdimethylvaleronitrile in 350 g of methoxybutyl acetate. The resulting copolymer had an acid value (dry) of 62.2 KOH-mg/g, a weight-average molecular weight (Mw) of 8700, and a degree of dispersion (Mw/Mn) of 1.9.

### COMPARATIVE EXAMPLE 5

A copolymer solution [having a solids content (NV) of 36.2 percent by weight] was prepared by placing 261 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 196 g of a 50:50 (by mole) mixture of 2-(3,4-epoxytricyclo[5.2.1.0^{2,6}]dec-9-yloxy)ethyl acrylate and 2-(3,4-epoxytricyclo[5.2.1.0^{2,6}]dec-8-yloxy)ethyl acrylate [compounds represented by Formula (12) in which Ra' is H], 28 g of methacrylic acid, 70 g of oxetane methacrylate, 56 g of benzyl methacrylate, and 39 g of azobisdimethylvaleronitrile in 350 g of methoxybutyl acetate. The resulting copolymer had an acid value (dry) of 97.3 KOH-mg/g, a weight-average molecular weight (Mw) of 7700, and a degree of dispersion (Mw/Mn) of 2.0.

### COMPARATIVE EXAMPLE 6

A copolymer solution [having a solids content (NV) of 36.5 percent by weight] was prepared by placing 254 g of methoxybutyl acetate in a separable flask having an inner capacity of 1 liter and equipped with a stirrer, a thermometer, a reflux condenser, a dropping funnel, and a nitrogen inlet tube; raising the temperature to 80°C; thereafter adding a solution mixture dropwise over 5 hours; and aging for further 3 hours. The solution mixture had been prepared by dissolving 214 g of a 50:50 (by mole) mixture of 3,4-epoxytricyclo[5.2.1.0^{2,6}]dec-9-yl acrylate and 3,4-epoxytricyclo[5.2.1.0^{2,6}]dec-8-yl acrylate [compounds represented by Formula (11) in which Ra' is H], 53 g of methacrylic acid, 46 g of styrene, 39 g of methyl methacrylate, and 46 g of azobisdimethylvaleronitrile in 350 g of methoxybutyl acetate. The resulting copolymer had an acid value (dry) of 47.2 KOH-mg/g, a weight-average molecular weight (Mw) of 7200, and a degree of dispersion (Mw/Mn) of 1.9.

### (Preparation of Curable Resin Compositions, and Cured Articles)

A series of composition solutions was prepared by diluting 100 g of each of the curable resin solutions (copolymer solutions) obtained in the examples and comparative examples with 50 g of methoxybutyl acetate; adding thereto 20 g of dipentaerythritol hexaacrylate and 7 g of 1-hydroxycyclohexylphenyl ketone (the trade name "IRGACURE 184" supplied by Ciba Specialty Chemicals); and filtrating the mixture through a filter with a pore size of 0.2 µm. The resulting composition solutions were subjected to evaluation tests in the following manner.

### (1) Evaluation of Hardness

The composition solutions were respectively applied to a glass substrate, prebaked at 80°C for 5 minutes, and thereby yielded coatings having a thickness of about 3 µm. The formed coatings were cured by irradiation using a highpressure mercury lamp at 120 W/cm from a height of 10 cm at a line speed of 30 m/min, heated at 200°C for 20 minutes, and thereby yielded test coatings (test pieces). The surface harnesses of the test coatings were determined by measuring the pencil hardnesses of the coatings through scratching according to the pencil scratch test specified in Japanese Industrial Standards (JIS) K-5400-1990, Section 8.4.1. The results are shown in Table 1.

### (2) Evaluation of Solvent Resistance

Test pieces prepared by the procedure as in the hardness evaluation test were immersed in methyl ethyl ketone at room temperature for 20 minutes, and how the interface in the immersed portion and how the coating in the immersed portion were visually observed. The evaluation was performed according to the following criteria. The results are shown in Table 1.
A (Excellent): No change is observed
B (Good): Only little change is observed
C (Fair): The coating is dissolved and the interface is exposed
D (Failure): The coating has a markedly reduced thickness

### (3) Evaluation of Thermal Stability

Test pieces prepared by the procedure as in the hardness evaluation test were subjected to measurement of thickness. The test pieces were then heated at 220°C for 1 hour, the thicknesses after the reheating treatment were measured, and the thickness reduction percentages were determined to determine how the thickness of the coating varied after the reheating treatment. The evaluation was performed according to the following criteria. The results are shown in Table 1.
A (Excellent): One having a thickness reduction percentage of less than 5%
B (Good): One having a thickness reduction percentage of 5% or more and less than 10%
C (Fair): One having a thickness reduction percentage of 10% or more and less than 15%
D (Failure): One having a thickness reduction percentage of 15% or more

[Table 1]

**TABLE 1**

| | Examples | | | | | | | | | | Comparative Examples | | | | | |
|---|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 | 6 |
| Hardness | 6H | 5H | 6H | 5H | 6H | 6H | 5H | 6H | 6H | 6H | 5H | 3H | 4H | 4H | 2H | 4H |
| Solvent resistance | A | A | A | A | A | A | A | A | A | A | B | C | B | B | C | B |
| Thermal stability | A | A | A | A | A | A | A | A | A | A | B | C | C | C | D | C |

### Industrial Applicability

Curable resin compositions containing the copolymers according to the present invention are useful typically as materials for the formation typically of liquid resists, dry films, insulating films, photosensitive materials, and liquid crystal display materials such as liquid crystal display photospacers, materials for the formation of liquid crystal display ribs, overcoats, color resists for the formation of color filters, and TFT insulating films.

## Claims

1. A copolymer comprising at least monomeric units (A), monomeric units (B), and monomeric units (C), the monomeric units (A) corresponding to at least one polymerizable unsaturated compound (a) containing a carboxyl group or an acid anhydride group, the monomeric units (B) corresponding to at least one polymerizable unsaturated compound (b) containing a bridged alicyclic group with an epoxy group on its ring and being selected from the group consisting of compounds represented by following Formulae (1) and (2): 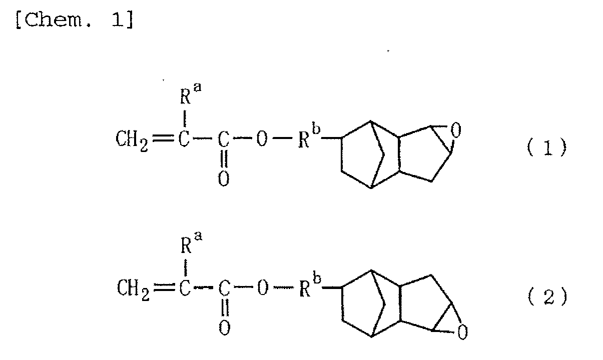 wherein R^{a}s in respective formulae independently represent a hydrogen atom or an alkyl or hydroxyalkyl group having 1 to 4 carbon atoms; and R^{b}s in respective formulae independently represent a single bond or an alkylene group which has 1 to 18 carbon atoms and which may contain a heteroatom,
and the monomeric units (C) corresponding to at least one polymerizable unsaturated compound (c) containing a bridged alicyclic group with a double bond in its ring and being selected from the group consisting of compounds represented by following Formulae (3) and (4): 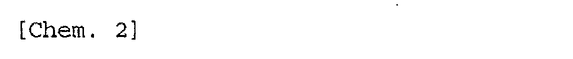 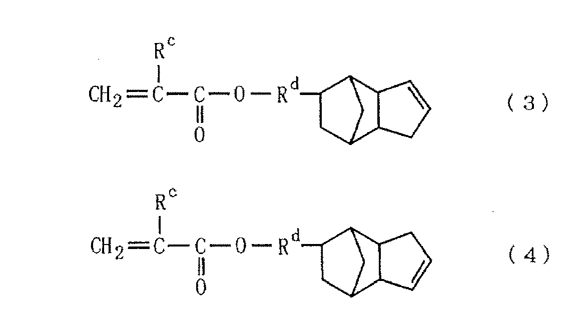 wherein R^{c}s in respective formulae independently represent a hydrogen atom or an alkyl or hydroxyalkyl group having 1 to 4 carbon atoms; and R^{d}s in respective formulae independently represent a single bond or an alkylene group which has 1 to 18 carbon atoms and which may contain a heteroatom.

2. The copolymer according to Claim 1, further comprising monomeric units (D) in addition to the monomeric units (A), monomeric units (B), and monomeric units (C), the monomeric units (D) corresponding to at least one polymerizable unsaturated compound (d) selected from the group of monomers consisting of styrenes (d1) which may be substituted with an alkyl group or a hydroxyl group; unsaturated carboxylic acid esters (d2); N-substituted maleimides (d3); and monocyclic or polycyclic olefins (d4), the unsaturated carboxylic acid esters (d2) being represented by following Formula (5): 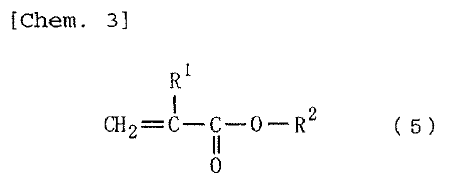 wherein R¹ represents a hydrogen atom or an alkyl group having 1 to 7 carbon atoms; R² represents a linear or branched-chain alkyl group having 1 to 18 carbon atoms, an alkenyl group having 2 to 18 carbon atoms, an aryl group, an aralkyl group, an -(R³-O)ₘ-R⁴ group (wherein R³ represents a bivalent hydrocarbon group having 1 to 12 carbon atoms; R⁴ represents a hydrogen atom or a hydrocarbon group; and "m" denotes an integer of 1 or more), or a group containing a nonaromatic monocyclic or polycyclic structure, and the N-substituted maleimides (d3) being represented by following Formula (6): 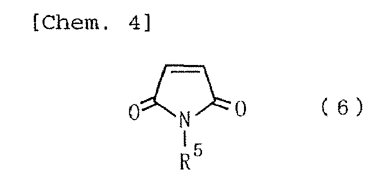 wherein R⁵ represents a substituted or unsubstituted phenyl group, a substituted or unsubstituted aralkyl group, or a substituted or unsubstituted cycloalkyl group.

3. A curable resin composition comprising the copolymer as claimed in one of Claims 1 and 2.

4. The curable resin composition according to Claim 3, further comprising a curing agent and/or a curing catalyst.
